# EUROPÄISCHE PATENTANMELDUNG

(11) **EP 1 995 115 A1**
(43) Veröffentlichungstag der Anmeldung: **26.11.2008**
(21) Anmeldenummer: 06824441.7
(22) Anmeldetag: 05.10.2006
(51) Int. Cl.: B60Q 1/44

(54) **PSYCHOMOTORISCHER INDIKATOR FÜR DAS BREMSEN UND BESCHLEUNIGUNGEN VON VERKEHRSMITTELN**

(30) Priorität: 01.11.2005 RU 2005133578
(71) Anmelder: Krotkov, Aleksei Borisovich, Moscow 109125 (RU)
(72) Erfinder: Krotkov, Aleksei Borisovich, Moscow 109125 (RU)
(74) Vertreter: Jeck, Anton
(86) Internationale Anmeldenummer: PCT/RU2006/000519
(87) Internationale Veröffentlichungsnummer: WO 2007/053058

(57) **Zusammenfassung**

Die Erfindung betrifft einen psychomotorischen Indikator für Verkehrsmittel, der dem Fahrer Lichtsignale abgibt, die von den Ruck beim Brems- und Beschleunigungsvorgang abhängig sind und deutlich wahrnehmbar sind, wenn vorgesehen ist, dass er einen oder mehrere Indikatoren, einen Kommutator sowie eine oder mehrere Gruppen von Lichtquellen (z. B. zwei) aufweist, wobei der Kommutator und die Gruppen von Lichtquellen den Effekt von zwei oder mehreren laufenden Lichtsignalen bilden, die eine Vergrößerung der sichtbaren Größen (oder Winkelgröße) des Verkehrsmittels beim Bremsen sowie eine Verkleinerung der sichtbaren Größe (Winkelgröße) bei der Beschleunigung des Verkehrsmittels imitieren.

## Beschreibung

Die Erfindung betrifft einen psychomotorischen Indikator für Verkehrsmittel, insbesondere für Lichtvorrichtungen zur Verkehrssicherheit.

Es sind Bremssicherheitslichter bekannt, deren Helligkeit oder effektive Fläche zu dem Beschleunigungswert des Verkehrsmittels proportional ist. Das Bremslicht stellt eine laufende Lichtquellenlinie dar, die beim Druck auf das Bremspedal einen Effekt, wie eine Linealauffüllung bezüglich einer Lichtsammlung, herstellt (russische Anmeldung Nr. 94039643/11).

Diese Einrichtung hat folgende Mängel:
- die Bremslichter gehen unangemessen bezüglich des tatsächlichen Bremsens des Verkehrsmittels an. Unvollständiges Bremsen bringt oft das Fahrzeug nicht zum Stehen, obwohl die Bremslichter schon angeschaltet sind. Wenn der Fahrer nicht bremst, z.B. beim Motorbremsen oder wegen Fahrzeugdefekt schalten sich die Bremslichter nicht von alleine an. Der große Anteil von falschem Anzeigen entzieht den Fahrer nicht nur die Möglichkeit sich den Bremslichtern anzuvertrauen, sondern auch den Fahrer abzulenken, was zu einer Gefahr bei derartigen Bremslichtern führt. Die Bremslichter als "laufendes Signal" lenken die Aufmerksamkeit des Fahrers noch mehr ab und reizen den Fahrer (so genanntes Autoklappern). Das Prinzip "laufendes Signal" wird nur für die Aufmerksamkeit bei der Beweglichkeit bzw. beim Wenden verwendet, dient aber auf keinerlei Weise zur Imitation einer Veränderung von sichtbaren Größen des Verkehrsmittels. Betreffs der adaptiven Bremslichter löst sich das Problem auch nicht, weil die Stufe der Helligkeit oder die Fläche des Bremslichtes vom Fahrer des Verkehrsmittels weder objektiv wahrgenommen noch schnell bewertet werden kann,
- der fehlende Brems-Beschleunigungsindikator des Verkehrsmittels kann die Sicherheit bzw. den Fahrkomfort nicht erhöhen, da infolge eine genaue Beachtung der Fahrdistanz bei dichtem Straßenverkehr nicht möglich ist.

Es ist Aufgabe der Erfindung einen psychomotorischen Indikator für Verkehrsmittel zu schaffen, der diese Mängel vermeidet und dem Fahrer deutliche Zeichen für den Brems- und Beschleunigungsvorgang setzt.

Diese Aufgabe wird nach der Erfindung dadurch gelöst, dass er einen oder mehrere Indikatoren, einen Kommutator sowie eine oder mehrere Gruppen von Lichtquellen (z. B. zwei) aufweist, wobei der Kommutator und die Gruppen von Lichtquellen den Effekt von zwei oder mehreren laufenden Lichtsignalen bilden, die eine Vergrößerung der sichtbaren Größen (oder Winkelgröße) des Verkehrsmittels beim Bremsen sowie eine Verkleinerung der sichtbaren Größe (Winkelgröße) bei der Beschleunigung des Verkehrsmittels imitieren.

Die Benachrichtigungssignale geben nur zur Zeit der Bremsentstehung und der Geschwindigkeitssteigerung einen Ruck und die Signalintensität ist proportional zur Größe des Rucks. Das Bremsbenachrichtigungssignal entspricht dem Prinzip der natürlichen Wahrnehmung vom menschlichen Auge dem Annäherungsbild zum Vorne fahrenden Fahrzeug. Das Signal informiert die Vergrößerung der sichtbaren Fahrzeuggröße und schafft ein "laufendes Licht" sowie eine Vergrößerung der eigenen Größen. Der Fahrer wird entsprechend der psychomotorischen Besonderheitswahrnehmung auf derartige Lichteffekte reflexiv und selbstverständlich reagieren. Da beim Bremsruckverschwindens das Anzeigesignal noch eine Zeit nachwirken soll ist vorgesehen, dass der Kommutator, der die Ein- und Ausschaltung der Gruppen von Lichtquellen steuert, mit einer vorgegebenen Wahrnehmungsverzögerung nach fixierter Zeit oder proportionalen Größe mit dem von Sensor gesteuerten Signal die Ausschaltung der Lichtsignale steuert. Das Nachleuchten ist umso länger, desto stärker der Bremsdruck ist.

Für das komfortable Fahren im Straßenverkehr wird des Lichtsignal auch bei der Geschwindigkeitssteigerung des Rucks nach dem ähnlichen Schema wie beim Bremsen arbeiten. Die Lichtsignale werden jedoch mit anderen Farben und Effekten gegeben.

Die Erfindung wird anhand eines in den Zeichnungen dargestellten Ausführungsbeispiels näher erläutert. Es zeigen:
- Fig. 1: schematisch den neuen psychomotorischen BremsBeschleunigungsindikator und
- Fig. 2: das Umschaltsystem für das Lichtsignal beim Bremsen und bei der Geschwindigkeitsbeschleunigung des Verkehrsmittels.

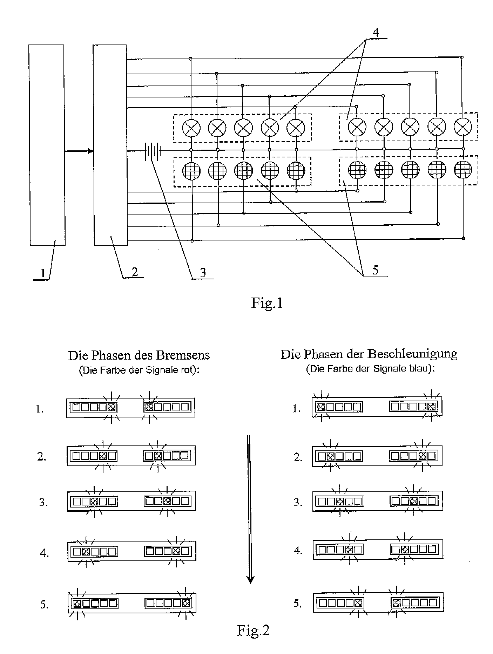

Wie Fig. 1 zeigt, besteht der Indikator aus einem Sensor 1 für die Geschwindigkeit der Beschleunigungsänderung (einem Rucksensor), einem Kommutator 2, einer Stromversorgungsquelle 3, einer Gruppe von elektrischen Lichtquellen 4 für die Darstellung der Bremsung des Verkehrsmittels (rote Lichtquellen), und einer Gruppe von elektrischen Lichtquellen 5 für die Darstellung der Beschleunigung des Verkehrsmittels (blaue Lichtquellen).

Wenn der Bremsruck des Fahrzeugs entsteht, sendet der Rucksensor 1 ein Signal an den Kommutator 2. Der Kommutator 2 wird abhängig von der Größe des Rucks die Lichtquellen 4 so ein- bzw. umschalten, dass ein laufender Effekt des Lichtsignals ihre sichtbare Größe bzw. Helligkeit vergrößert, wobei je stärker das Bremsen ist, desto schneller läuft das Licht auseinander (Der Abstand der Lichtsignale an der Gruppe der roten Lichtquellen 4 wird mit steigendem Bremsruck größer). Ähnlich verhält es sich bei der Gruppe der blauen Lichtquellen 5, wenn ein Beschleunigungsruck entsteht. Der Kommutator 2 schaltet in Abhängigkeit der Größe des Rucks die Lampen 5 so ein bzw. um, dass der Annäherungseffekt und die Verkleinerung ihrer sichtbaren Größe bzw. Helligkeit des Lichtsignals geschaffen wird, je stärker das Signal des Rucksensors 1 in Abhängigkeit von der Geschwindigkeit der Bildverkleinerung ist.

Die Einrichtung ist vollständig unabhängig, d.h. dank des selbständigen Körpers und der unabhängigen Befestigung braucht diese Einrichtung nicht mit irgendwelchen Systemen des Fahrzeugs gekoppelt und angeschlossen zu werden.

## Patentansprüche

1. Psychomotorischer Indikator für Verkehrsmittel,
**dadurch gekennzeichnet,**
**dass** er einen oder mehrere Indikatoren (1 - Rucksensoren), einen Kommutator (2) sowie eine oder mehrere Gruppen von Lichtquellen (z. B. zwei) aufweist, wobei der Kommutator (2) und die Gruppen von Lichtquellen (4 und 5) den Effekt von zwei oder mehreren laufenden Lichtsignalen bilden, die eine Vergrößerung der sichtbaren Größen (oder Winkelgröße) des Verkehrsmittels beim Bremsen sowie eine Verkleinerung der sichtbaren Größe (Winkelgröße) bei der Beschleunigung des Verkehrsmittels imitieren.

2. Indikator nach Anspruch 1,
**dadurch gekennzeichnet,**
**dass** der Kommutator (2), der die Ein- und Ausschaltung der Gruppen von Lichtquellen (4 und 5) steuert, mit einer vorgegebenen Wahrnehmungsverzögerung nach fixierter Zeit oder proportionalen Größe mit dem von Sensor (1) gesteuerten Signal die Ausschaltung der Lichtsignale steuert.

3. Indikator nach Anspruch 1 und 2,
**dadurch gekennzeichnet**,
das der Sensor (1) für die Geschwindigkeitsänderung gleichzeitig eine Energiequelle für den Kommutator (2) und die Gruppen von Lichtquellen (4 und 5) bildet.

4. Indikator nach Anspruch 1 und 2,
**dadurch gekennzeichnet,**
**dass** er eine eigene Energiequelle (3) und einen unabhängigen Aufbau von den anderen Elementen bei verschiedenen Verkehrsmitteln besitzt.
